# EUROPEAN PATENT SPECIFICATION

(11) **EP 0 577 868 B1**
(45) Date of publication and mention of the grant of the patent: **20.03.1996**
(21) Application number: 92111431.0
(22) Date of filing: 06.07.1992
(51) Int. Cl.: B01D 9/00

(54) **Method and apparatus for crystallization of organic matter**
Verfahren und Vorrichtung zur Kristallisation organischer Stoffe
Méthode et appareil de cristallisation de matière organique

(43) Date of publication of application: 12.01.1994
(73) Proprietor: Tsukishima Kikai Co. Ltd., Chuo-ku Tokyo (JP)
(72) Inventor: Morita, Minoru, c/o Tsukishima Kikai Co., Ltd., Chuo-ku, Tokyo (JP); Takegami, Keizo, c/o Tsukishima Kikai Co., Ltd., Chuo-ku, Tokyo (JP)
(74) Representative: Neidl-Stippler, Cornelia, Dr.

(56) References cited:
- DE-A- 1 517 438
- DE-A- 1 619 765
- DE-A- 1 619 775
- DE-B- 2 528 611
- US-A- 4 452 621

## Description

### 1. Field of the Invention

This invention relates to a method and an apparatus for crystallization of an organic matter.

### 2. Related Art

Generally, as methods for crystallization of an organic matter, there are (1) Melting-Type Purification, (2) Crystallization Using Solvent (being soluble each other), (3) Cooling Crystallization with Solution being Insoluble in Organic Matter (such as water).

On the other hand, cooling methods for industrial crystallization can be classified as follows.
(A) Indirect Cooling: A molten organic matter is fed into a thin, cylindrical vessel. A cooling jacket is provided on the outside of the vessel and cooling water is passed through the cooling jacket. Thus, crystals are formed and attached to the inner surface of the above vessel. These crystals are scraped and deposited with means such as a scraping blade so as to be withdrawn in the form of slurry and separated outside of this system.
(B) Direct Cooling: A molten organic matter is fed into a vessel having an agitator. At the same time, a solvent being insoluble in the organic matter, such as water, is fed to the vessel. Thus, cooling is carried out for crystallization, while the organic matter is dispersed in the water.
(C) Adiabatic Cooling: An organic matter is dissolved in a solvent and operated under the condition of self-evaporation performed in a crystallizer. Thus, a produced vapor is compressed by a compressor and condensed by a condenser. In this process, a condensed refrigerant is recycled to the crystallizer.

The above method (1) Melting-Type Purification has a fundamental defect that the organic matter is deteriorated because of high temperature at which the treated organic matter is melted.

Further, the method (A) Indirect Cooling, due to the low heat transfer coefficient of the order of 200 - 500 Kcal/m²· °C· hr, requires a large sized apparatus and a high construction cost.

In the method (B) Direct Cooling classified in the above system (3), small quantity of the organic matter is often dissolved in the water. Thus, its treatment requires a high cost.

On the other hand, in the method (2), that is adiabatic self-evaporation cooling using the solvent, a crystallizer should be operated at a condensing temperature which is too low for normal cooling water to condense. Accordingly, large sized refrigerating equipment is required resulting in a high construction cost. Further, when the method (C) Adiabatic Cooling is adopted, in general, a compressor should be used in order to rise a compressing temperature under a high pressure. Accordingly, a high operation cost is required for the compressor. In some cases, depending on an evaporating temperature and a temperature of cooling water, the compressor is not required. However, since the condensing temperature of the refrigerant is usually under 0°C, even if the compressor is not used, brine must be produced by a refrigerator for condensation, which causes a heavy investment for a construction cost related to refrigerating equipment.

### Summary of the Invention

It is, therefore, the object of the present invention to provide a method and an apparatus for crystallization of an organic matter by which crystals having high purity can be produced with a low operation and construction cost.

According to one aspect of the present invention, there is provided a method for crystallization of an organic matter which comprises:
providing a crystallizer, an absorber, a generator and a condenser;
performing adiabatic self-evaporation cooling of a refrigerant in the crystallizer for the treated organic matter which contains the refrigerant and is fed into the crystallizer and withdrawing crystals produced by the adiabatic self-evaporation cooling from the crystallizer;
introducing an evaporated vapor from the crystallizer into the absorber so as to be contacted with a concentrated solution transformed from the generator for condensation in the absorber;
introducing a condensate from the absorber into the generator, evaporating the refrigerant in the generator, introducing an evaporated vapor from the generator into the condenser;
condensing the evaporated vapor in the condenser, supplying a condensate from the condenser to the crystallizer; and
forming a circuit between the absorber and the generator by returning the concentrated solution, in which the concentration of an absorbent is increased by the generator, to the absorber and introducing a diluted condensate, in which the concentration of the absorbent is decreased by the absorber, to the generator.

If a mother liquor of the crystallizer is fed to the condenser, the higher temperature of cooling water can be approved for the condensation and higher condensing pressure is not required, that is, under a comparatively lower pressure the condensation can be performed.

According to another aspect of the present invention, there is provided an apparatus for crystallization of an organic matter comprising:
a crystallizer for crystallizing the organic matter fed into the crystallizer while the organic matter contains a refrigerant and for performing adiabatic self-evaporation cooling of the refrigerant;
means for withdrawing crystals produced by the self-evaporation cooling from the crystallizer;
an absorber for condensing an evaporated vapor received from the crystallizer;
a generator for evaporating the refrigerant with a diluted condensate in which the concentration of an absorbent is decreased by the absorber;
a condenser for condensing a vapor evaporated in the generator,
means for supplying a condensate from the condenser to the crystallizer;
means for returning the concentrated solution, in which the concentration of the absorbent is increased by the generator, to the absorber; and
a heat exchanger located between the absorber and the generator for performing heat exchange between the concentrated solution and a condensate transformed from the absorber to the generator.

If a sub-absorber is located between the crystallizer and the absorber for contacting the organic matter with the evaporated vapor from the crystallizer before introducing the organic matter to the crystallizer, much load is not put on the absorber, the generator and the condenser, which results in the advantage of a reduced construction cost and small maintenance fee.

In the present invention, since the solvent is added, the temperature for crystallization can be lowered, thereby, quality of the crystals can be improved. Further, crystallization can be carried out by the self-evaporating adiabatic cooling of the refrigerant in the crystallizer. Accordingly, it is unnecessary to obtain cooling heat required for the crystallization from the outside, thus, refrigerating equipment is unnecessary. As a result, an operation and construction cost can be lowered.

### Brief Description of the Drawings

Other objects, features and advantages of the invention will become apparent from the detailed description of the preferred embodiments of the invention which follows, when considered in light of the accompanying drawings, in which:
Fig. 1 is a flow sheet showing the first example of the present invention;
Fig. 2 is a flow sheet showing the second example of the present invention;
Fig. 3 is a flow sheet showing the modification of the present invention; and
Fig. 4 is a flow sheet showing another modification of the present invention.

### Detailed Description of Preferred Embodiment

Now, the present invention will be explained more closely by examples with reference to the drawings.

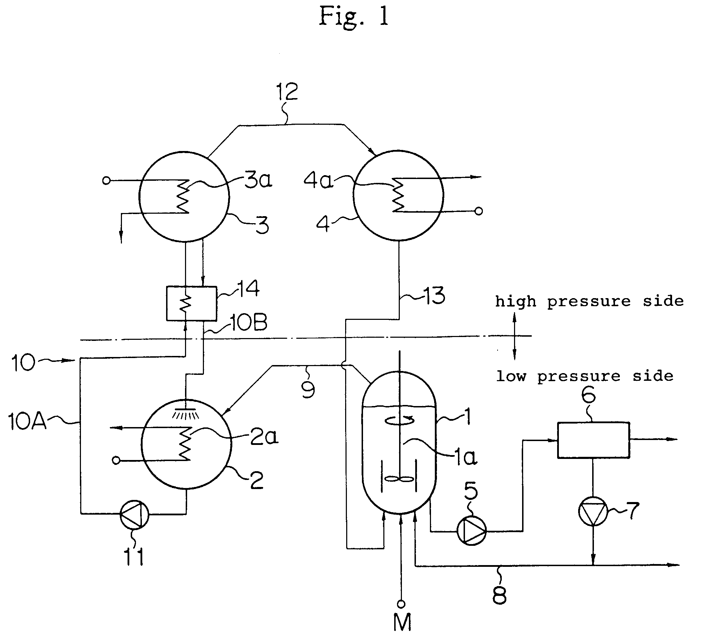

Fig. 1 shows the first example. Reference numeral 1, 2, 3 and 4 designate a crystallizer, an absorber, a generator and a condenser, respectively. Crystal-slurry formed in the crystallizer 1 is introduced to a solid-liquid separator 6, a centrifuge or a horizontal filter and the like by a crystal withdrawing pump 5. Almost all filtrate from the crystal-slurry is recycled to the crystallizer 1 through a returning passage 8 by a returning pump 7. Crystals are taken as final products directly or through succeeding other crystallizing means. On the other hand, the crystallizer 1 and the absorber 2 are operated under a low pressure while the generator 3 and the condenser 4 are operated under a high pressure.

In case that a treated organic matter M serves as an absorbent, the organic matter M is fed from the outside into the crystallizer 1 having an agitator 1a under the presence of the refrigerant of the order of 1-5 %. The crystallizer 1 is operated in a vacuum or under a certain pressure. The treated organic matter is mixed by means of the agitator 1a with the condensed refrigerant transformed from the condenser 4. Reducing of the pressure of the refrigerant occurred by this mixing causes evaporation of the refrigerant. Thereby, crystallization heat is removed so that the crystals are deposited. The slurry containing the deposited crystals becomes final products by means of the above operations.

A vapor produced in the crystallizer 1 is fed into the absorber 2 through a vapor pipe-line 9. The vapor is contacted with a concentrated absorbent solution returned through a returning passage 10B of a circulating passage 10 for the concentrated absorbent solution. For this reason, boiling point rise is occurred and a condensing temperature is risen. On the other hand, the absorbent solution contacts with the vapor transformed from the crystallizer 1 and condenses the vapor through a cooler 2a so as to absorb the vapor.

A condensate in the absorber 2 is fed to the generator 3 through a transporting passage 10A by means of a concentrated solution circulating pump 11. In the generator 3, the refrigerant contained in the concentrated solution is evaporated by steam or other heat source with a heater 3a equipped in the generator 3. The evaporated refrigerant is introduced to the condenser 4 through a refrigerant transporting passage 12. In the condenser 4, the evaporated refrigerant is cooled with a cooler 4a equipped in the condenser 4 so as to be condensed. A condensate is introduced to the crystallizer 1 through a returning passage 13 so as to be applied in the adiabatic self-evaporation cooling of the refrigerant.

The absorbent solution, from which the refrigerant is removed in the generator 3 so as to increase own concentration, is passed through a heat exchanger 14 for heating the concentrated absorbent solution transforming to the generator 3 and is returned to the absorber 2 through the returning passage 10B.

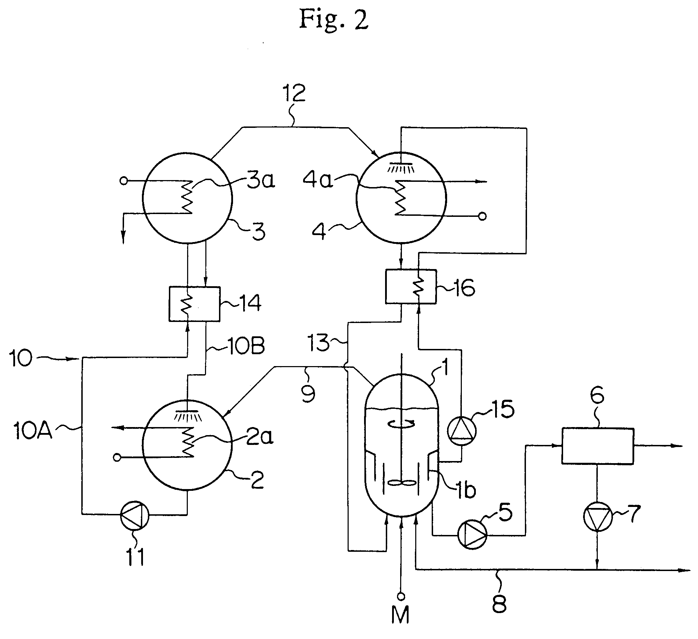

Fig 2 shows the second embodiment which includes mother liquor circulation. A mother liquor separated from crystal-slurry with a separating plate 1b is withdrawn from a crystallizer 1 with a mother liquor circulating pump 15. Then, the mother liquor is fed to a condenser 4 through a heat exchanger 16 and mixed with a vapor fed from a generator 3 so that the concentration of a solute (organic matter) is increased for boiling point rise. Precisely, the condensing temperature can be risen under the constant pressure, while the pressure can be reduced under the constant condensing temperature. Therefore, comparing with the case that a pure refrigerant is only condensed, the higher temperature of the cooling water can be approved for the condensation and higher condensing pressure is not required, that is, under a comparatively lower pressure the condensation can be performed. As the mother liquor, a filtrate of a solid-liquid separator 6 can be applied.

In the present invention, there are various modifications of operation depending on kinds of combination of the refrigerant, the absorbent and the organic matter. Now, these modifications will be explained.

Case (1) The absorbent and the refrigerant are not in vapor-liquid equilibrium and the absorbent are circulating only between the generator and the absorber.

This case is that the refrigerant and the product (organic matter) are soluble each other and they are not in vapor-liquid equilibrium or the organic matter is not the absorbent. For example, the water-lithium bromide system is used as the refrigerant-absorbent, then the absorbent is circulated between the generator and the absorber. In this embodiment, as long as water is used as the refrigerant, it is difficult that the temperature drops under -10 °C in the crystallizer. However, if Freon (trademark) R22(CHCl₂F) - E181(CH₃O (CH₂CH₂O)₃) are used as the refrigerant-absorbent, it is possible that the temperature drops into the order of -10 °C to -60°C in the crystallizer. Further, if the above mother liquor circulation is applied, the higher condensing temperature is approved in the condenser. As the examples of refrigerant-organic matter system in this embodiment, there are the water-nitrobenzene system where the absorbent is lithium bromide and the styrene-R22 system where the absorbent is E181 and the like.

Case (2) The refrigerant is the solvent of the organic matter and the organic matter (product) is the absorbent.

This case is that the organic matter does not exist in eutectic equilibrium and does not contain other substances causing the boiling point rise. Precisely, this case is that the almost pure organic matter has a certain solubility in the refrigerant and exists in vapor-liquid equilibrium. For example, there are methanol-methyl methacrylate (MAA), acrylic acid (AA)-acetic acid, Freon R22-hexamethlenediamine (HMDA), Freon R22-adipic acid.

The generator and the condenser are operated under higher pressure comparing with the crystallizer and the absorber so that the condensing temperature is risen, that is, the difference of the condensing temperature is produced. This is more efficient reason of heat transfer than the reason of the use of absorption heat. Particularly, for the substances which are in equilibrium almost according with Raoult's law, the vapor-liquid equilibrium is linear so that large mixing heat can not be generated.

Case (3) The refrigerant and the solvent are in vapor-liquid equilibrium and the solvent is the absorbent.

An example of this case is the relation of the adduct of bisphenol A (BPA), phenol and water. The bisphenol A and the phenol are in equilibrium. When these substances are cooled, the adduct of the bisphenol A and the phenol is deposited. Only the phenol can be used as the refrigerant as well as the solvent. However, in order to obtain more purified crystals, the water is preferably used as the refrigerant. When the water is added so as to perform the adiabatic cooling, the water and the phenol can be obtained in the form of vapor. According to the present invention, the adiabatic cooling can be carried out surely without a booster, a tiller refrigerator and a compressor. Further, even for evaporating the phenol having low pressure of the order of 0.1 to 2.0 mmHg, a vacuum device is not required.

In the present invention, there are the following embodiments depending on the purity of the molten feed-material and the amount of withdrawn crystals.

Embodiment (1) A mother liquor fed to a crystallizer has a high purity.

When the purity of the mother liquor fed to the crystallizer is higher than 95.0%, particularly is the order of 99.9%, the amount of the mother liquor withdrawn from the crystallizer is very small. Stripping operation, however, is necessary to recover the mother liquor. The stripped refrigerant is absorbed by the supplied feed, but the resultant concentration of the refrigerant can not reach a desired value for the crystallizer. This problem is solved by the following embodiment.

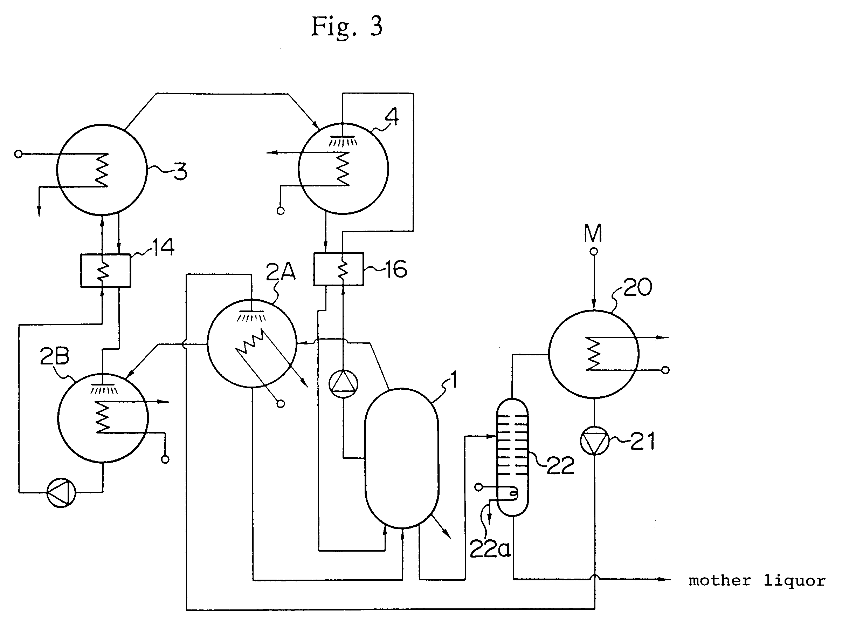

This embodiment is explained referring to Fig. 3. With respect to the direction of a vapor from a crystallizer 1, the first absorber 2A and the second absorber 2B are arranged in series. A material M is fed to the first absorber 2A through a condenser 20 by means of a feed pump 21. In the first absorber 2A, a refrigerant is absorbed into the material so that the absorbing capacity of the material is left when the absorption is finished, then the material is fed to the crystallizer 1. Thus, much load is not put on the absorber. Accordingly, also on the generator 3 and the condenser 4, much load is not put, which results in the advantage of a reduced construction cost and small maintenance fee. The refrigerant is absorbed into the mother liquor at the same temperature as that at which the second absorber 2B is operated. The mother liquor withdrawn partly from the crystallizer 1 is fed to a stripper 22. In the stripper 22, the mother liquor is heated with a heater 22a so that the refrigerant is separated. The mother liquor is fed out from the system and the refrigerant is introduced to the first absorber 2A together with the material.

Embodiment (2) An absorbent solution contains a large amount of impurities. Accordingly, a large amount of mother liquor should be withdrawn from a crystallizer.

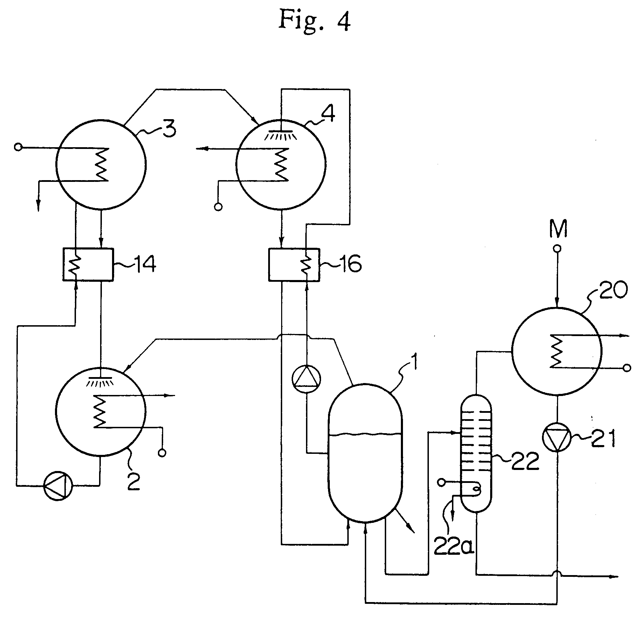

In this case, as shown in Fig. 4, since the withdrawn mother liquor contains a large amount of refrigerant, this refrigerant is stripped in the stripper 22 so as to be absorbed into the new material M for feeding to the crystallizer 1.

Now, the effects of the present invention will be made clear by the examples.

In the following examples, a vertical crystallizer (Diameter of 300 mm x Height of 1.5 m, the holdup volume of slurry is 30 liter) is used as a crystallizer. As the absorber, the generator, the condenser and the heat exchanger, apparatuses of horizontal multi-pipe type are used (the values of heat transfer area are 0.3 m², 0.3 m², 0.3 m² and 0.2m² respectively.).

### 〈Example 1〉

In this example, the absorbent is LiBr, the refrigerant is water and the absorbent is circulated only between the absorber and the generator.

In the above pilot plant of crystallization, nitrobenzene solution having the material concentration of 91 to 92 % is fed to the crystallizer at the rate of 13 kg/h. The crystallizer is operated at the temperature of 5.0 to 5.5 °C, under the pressure of 6.0 to 7.0 torr. The water concentration is 0.15 to 0.2% and the purity of the produced crystals is 0.97 to 1.0 kg/h.

A water vapor produced in the crystallizer is transformed to the absorber. In the absorber, after receiving a solution of LiBr having the concentration of 62.0% and the temperature of 39 to 40 °C and transformed from the generator operated under the pressure of 6 to 7 torr, the water vapor is absorbed so that the solution of LiBr having the concentration of 58.0 % is produced. This solution is transformed to the generator. In the generator, the solution is heated by steam having the temperature of 140 °C. Then, the generated vapor is fed to the condenser. The condenser is operated under the pressure of 60 torr and at the condensing temperature of 41 °C. A resultant condensate contains LiBr having the concentration of 2 to 3 ppm. Finally, this condensate is fed to the crystallizer at the rate of 1.0 to 1.1 kg/h.

The amount of the steam used in the above operation is 1.0 to 1.1 kg/h. It is clearly understood that by means of circulation of the water vaporized by the crystallization, the heat required for the crystallization can be removed without a compression refrigerator or an absorption refrigerator.

If a compressor driven by steam (steam booster) was used, 1.7 to 1.9 kg/h of medium pressure steam having the pressure of 10 to 15 kg/cm² (absolute pressure) would be required as driving steam under the operating pressure of 15 torr. It is clearly understood that the amount of the driving steam would be increased by 3 to 4 times that of the vapor.

### 〈Example 2〉

In this example, the refrigerant is the solvent of the organic matter and the organic matter is the absorbent.

Using the pilot plant shown in Fig. 2, the method of the present invention is applied to lactam-water system. The fed solution is supplied at the rate of 12.8 kg/h. The generated vapor is transformed to the absorber. The crystallizer is operated at the temperature of 52 °C under the pressure of 15 torr. The concentrated lactam having the concentration of 1% is fed to the absorber from the generator at the rate of 4.5 kg/h so that the condensate having the concentration of 5% is obtained. Then, this solution is supplied to the generator. The generator is operated under the pressure of 30 torr at the evaporating temperature of 110 °C. The concentrated solution is returned to the absorber and the vapor generated in the generator is transformed to the condenser. To the condenser, the solution of the crystallizer is fed at the rate of 12 to 13 kg/hr so that the condensate having the water of 18 to 19 % can be obtained at the condensing temperature of 48°C. This condensate is transformed to the crystallizer so that adiabatic cooling is performed in the crystallizer. Comparing with this, if the mother liquor is not circulated but just water is used, the condensing temperature is 29 °C resulting in necessity of a refrigerator for stable operation. The amount of the consumed steam in the generator is 2.7 to 2.8 kg/h. Precisely, the mother liquor circulation shows a significant effect.

In crystallization of this kind to evaporate ammonia, for example, when the ammonia vapor is condensed at the rate of 1000 kg/h and at the temperature of 40 °C under the applied pressure of 0.8 kgf/cm²G, the pressure should be increased to 10 kgf/cm²G. Required power of a compressor for this increasing is 190 to 200 kw. Comparing with this, in the embodiment of the present invention where the ammonia is absorbed into the water, the steam having the pressure of 5 kg f/cm²G is consumed at the rate of 1.25 to 1.35 kg/h enough, which indicates clearly that the operation cost is decreased extremely.

### 〈Example 3〉

In this example, the refrigerant and the solvent are in vapor-liquid equilibrium and the solvent is the absorbent.

Bisphenol A forms an adduct with phenol and this adduct is deposited under the determined condition. It is known that the quality can be improved by adding water. Using the above pilot plant, a material solution containing DDP having the concentration of 40 to 41 wt% and phenol having the concentration of 49 to 50 wt% is fed continuously to an adiabatic vacuum crystallizer at the rate of 30 to 31 kg/hr at the temperature of 110 to 115 °C. Thus, crystals of the phenol adduct is obtained at the rate of 10 kg/h. In this case, the operation condition is that the operation pressure of the crystallizer is 35 to 38 torr, the temperature is 48 °C and the water content is 4.0 wt%. The generated vapor is transformed to the absorber and mixed with the concentrated solution having the phenol concentration of 99 wt% fed from the generator at the rate of 45.4 kg/h. Thus, a phenol solution having the concentration of 99.0 wt% and the condensing temperature of 45 °C can be obtained. Then, this solution is fed to the generator through the heat exchanger. In the generator, a phenol water vapor is produced by heating of 3.6 kg/h of the steam having the temperature of 130 °C under the operation pressure of 80 torr and at the evaporating temperature of 80 to 82 °C. This vapor is transformed to the condenser. The amount of this vapor is 2.9 kg/h and its condensing temperature is 45 °C. In this operation, the mother liquor of the crystallizer is not recycled to the condenser. However, in the case that the mother liquor is circulated to the condenser and the condensate having the concentration of 20% can be obtained, the condensing temperature is 50 °C.

As explained above, when the crystallizer for the bisphenol A is operated technically, operation with a tiller is required, but according to the method of the present invention, the amount 2.9 kg/h of the steam is enough, which shows clearly that economical apparatus can be provided.

As a result, by recycling the vapor produced in the crystallizer without a compression refrigerator and an absorption refrigerator, the required heat for crystallization can be removed.

## Claims

1. A method for crystallization of an organic matter which comprises:
providing a crystallizer (1), an absorber (2), a generator (3) and a condenser (4);
performing adiabatic self-evaporation cooling of a refrigerant in said crystallizer (1) for said treated organic matter (M) which contains said refrigerant and is fed into said crystallizer (1) and withdrawing crystals produced by said adiabatic self-evaporation cooling from said crystallizer (1);
introducing an evaporated vapor from said crystallizer (1) into said absorber (2) so as to be contacted with a concentrated solution transformed from said generator (3) for condensation in said absorber (2);
introducing a condensate from said absorber (2) into said generator (3), evaporating said refrigerant in said generator (3), introducing an evaporated vapor from said generator (3) into said condenser (4);
condensing said evaporated vapor in said condenser (4), supplying a condensate from said condenser (4) to said crystallizer (1); and
forming a circuit between said absorber (2) and said generator (3) by returning said concentrated solution, in which the concentration of an absorbent is increased by said generator (3), to said absorber (2) and introducing a diluted condensate, in which the concentration of said absorbent is decreased by said absorber (2), to said generator (3).

2. A method according to Claim 1, wherein a mother liquor of said crystallizer (1) is fed to said condenser (4).

3. A method according to Claim 1 or 2, wherein said refrigerant is a solvent for said organic matter and said solvent is said absorbent.

4. An apparatus for crystallization of an organic matter comprising:
a crystallizer (1) for crystallizing said organic matter fed into said crystallizer (1) while said organic matter contains a refrigerant and for performing adiabatic self-evaporation cooling of said refrigerant;
means for withdrawing crystals produced by said self-evaporation cooling from said crystallizer (1);
an absorber (2) for condensing an evaporated vapor received from said crystallizer (1);
a generator (3) for evaporating said refrigerant with a diluted condensate in which the concentration of an absorbent is decreased by said absorber (2);
a condenser (4) for condensing a vapor evaporated in said generator (3);
means for supplying a condensate from said condenser (4) to said crystallizer (1);
means for returning said concentrated solution, in which the concentration of said absorbent is increased by said generator (3), to said absorber (2); and
a heat exchanger (14) located between said absorber (2) and said generator (3) for performing heat exchange between said concentrated solution and a condensate transformed from said absorber (2) to said generator (3).

5. An apparatus according to Claim 4, further comprising means for returning a mother liquor of said crystallizer (1) to said condenser (4).

6. An apparatus according to Claim 4, further comprising means for returning a mother liquor of said crystallizer (1) to said condenser (4) and a heat exchanger (16) for performing heat exchange between said condensate transformed from said condenser (4) to said crystallizer (1) and said mother liquor returned from said crystallizer (1) to said condenser (4).

7. An apparatus according to Claim 4, further comprising a sub-absorber (2A) located between said crystallizer (1) and said absorber (2B) for contacting said organic matter (M) with said evaporated vapor from said crystallizer (1) before introducing said organic matter (M) to said crystallizer (1).

## Patentansprüche

1. Verfahren zur Kristallisation eines organischen Materials, das aufweist:
vorsehen eines Kristallisators (1), eines Absorbers (2), eines Generators (3) und eines Kondensators (4);
Ausführen adiabatischer Selbstverdampfungskühlung eines Kühlmittels im Kristallisator (1) für das behandelte organische Material (M), das das Kühlmittel enthält und in den Kristallisator (1) eingeführt wird und Abziehen der Kristalle, die durch die adiabatische Selbstverdampfungskühlung vom Kristallisator (1) hergestellt werden;
Einführen eines verdampften Dampfes vom Kristallisator (1) in den Absorber (2), um diesen mit einer konzentrierten Lösung, die vom Generator (3) zur Kondensation im Absorber (2) transportiert wird, zu kontaktieren;
Einführen eines Kondensats vom Absorber (2) in den Generator (3), verdampfen des Kühlmittels im Generator (3), Einführen eines verdampften Dampfes aus dem Generator (3) in den Kondensator (4);
Kondensieren des verdampften Dampfes im Kondensator (4);
Führen des Kondensats vom Kondensator (4) zum Kristallisator (1); und
Bilden eines Kreislaufs zwischen dem Absorber (2) und dem Generator (3) durch Rückführen der konzentrierten Lösung, wobei die Konzentration des Absorptionsmittels durch den Generator (3) erhöht wird, zum Absorber (2) und Überführen eines verdünnten Kondensats, in welchem die Konzentration des Absorptionsmittels durch den Absorber (2) erniedrigt wird, zum Generator (3).

2. Verfahren nach Anspruch 1, wobei eine Mutterlauge des Kristallisators (1) zum Kondensator (4) geführt wird.

3. Verfahren nach Anspruch 1 oder 2, wobei das Kühlmittel ein Lösungsmittel für das organische Material und das Lösungsmittel das Absorptionsmittel ist.

4. Vorrichtung zur Kristallisation organischer Materialien, die aufweist:
einen Kristallisator (1), der das Kühlmittel enthaltende organische Material, das in den Kristallisator (1) geführt wird, kristallisiert und der eine adiabatische Selbstverdampfungskühlung des Kühlmittels durchführt;
Mittel zum Abziehen der Kristalle, die durch die Selbstverdampfungskühlunghergestellt werden vom Kristallisator (1);
einen Absorber (2) zur Kondensation des verdampften Dampfes vom Kristallisator (1);
einen Generator (3) zum verdampfen des Kühlmittels mit einem verdünnten Kondensat, in welchem die Konzentration eines Absorptionsmittels durch den Absorber (2) verringert wird;
einen Kondensator (4) zur Kondensation eines im Generator (3) verdampften Dampfes;
Mittel zum Führen des Kondensats vom Kondensator (4) zum Kristallisator (1);
Mittel zum Rückführen der konzentrierten Lösung, in der die Konzentration des Absorptionsmittels durch den Generator (3) erhöht ist, zum Absorber (2); und
einen zwischen Absorber (2) und Generator (3) angeordneten Wärmetauscher, um Wärmeaustausch zwischen der konzentrierten Lösung und einem Kondensat, das vom Absorber (2) zum Generator (3) transportiert wird, durchzuführen.

5. Vorrichtung nach Anspruch 4, die weiterhin Mittel zum Rückführen einer Mutterlauge vom Kristallisator (1) zum Kondensator (4) aufweist.

6. Vorrichtung nach Anspruch 4, die weiterhin aufweist:
Mittel zum Rückführen einer Mutterlauge vom Kristallisator (1) zum Kondensator (4); und
einen Wärmetauscher (16) zum Durchführen des Wärmeaustauschs zwischen dem Kondensat, das vom Kondensator (4) zum Kristallisator (1) transportiert wird und der Mutterlauge, die vom Kristallisator (1) zum Kondensator (4) rückgeführt wird.

7. Vorrichtung nach Anspruch 4, die weiterhin einen untergeordneten Absorber (2A) enthält, der zwischen dem Kristallisator (1) und dem Absorber (2B) angeordnet ist, um das organische Material (M) mit dem verdampften Dampf vom Kristallisator (1) zu kontaktieren, bevor das organische Material in den Kristallisator (1) eingeführt wird.

## Revendications

1. Procédé de cristallisation d'une substance organique dans lequel:
on prend un cristallisoir (1), un absorbeur (2), un générateur (3) et un condenseur (4);
on procède, dans ledit cristallisoir (1) à un refroidissement par auto-évaporation adiabatique d'un réfrigérant par ladite substance organique traitée (M) qui contient ledit réfrigérant et est introduite dans ledit cristallisoir (1), et, on enlève des cristaux produits par ledit refroidissement par auto-évaporation adiabatique du cristallisoir (1);
on introduit dans ledit absorbeur (2) une vapeur évaporée dudit cristallisoir (1) de façon à être mise en contact avec une solution concentrée transformée par ledit générateur (3) pour condensation dans ledit absorbeur (2);
on introduit dans ledit générateur (3) un condensat dudit absorbeur (2), on fait évaporer ledit réfrigérant dans ledit générateur (3), on introduit dans ledit condenseur (4) une vapeur évaporée dudit générateur (3);
on fait condenser ladite vapeur évaporée dans ledit condenseur (4);
on alimente ledit cristallisoir (1) avec un condensat dudit condenseur(4); et
on forme un circuit entre ledit absorbeur (2) et ledit générateur (3) en renvoyant ladite solution concentrée, dans laquelle la concentration d'un absorbant est augmentée par ledit générateur (3), dans ledit absorbeur (2) et en introduisant un condensat dilué, dans lequel la concentration dudit absorbant est diminué par ledit absorbeur (2), dans ledit générateur (3).

2. Procédé selon la revendication 1, dans lequel une liqueur-mère dudit cristallisoir (1) est introduite dans ledit condenseur (4).

3. Procédé selon l'une des revendications 1 ou 2, dans lequel ledit réfrigérant est un solvant pour ladite substance organique et ledit solvant est ledit absorbant.

4. Appareil de cristallisation d'une substance organique comprenant:
un cristallisoir (1) pour la cristallisation de ladite substance organique introduite dans ledit cristallisoir (1) tant que cette substance organique contient un réfrigérant et pour procéder à un refroidissement par auto-évaporation adiabatique dudit réfrigérant;
des moyens d'enlèvement dudit cristallisoir (1) des cristaux produits par ledit refroidissement par auto-évaporation;
un absorbeur (2) pour condenser une vapeur évaporée du cristallisoir (1);
un générateur (3) pour évaporer ledit réfrigérant à l'aide d'un condensat dilué dans lequel la concentration d'un absorbant est diminuée par ledit absorbeur (2);
un condenseur (4) pour condenser une vapeur évaporée dans ledit générateur (3);
des moyens pour alimenter ledit cristallisoir (1) avec un condensat dudit condenseur (4);
des moyens pour renvoyer dans ledit absorbeur (2) ladite solution concentrée, dans laquelle la concentration dudit absorbant est augmentée par ledit générateur (3); et
un échangeur de chaleur (14), situé entre ledit absorbeur (2) et ledit générateur (3), pour effectuer un échange de chaleur entre ladite solution concentrée et un condensat dudit absorbeur (2) transformée dans ledit générateur (3).

5. Appareil selon la revendication 4, comprenant en outre des moyens pour renvoyer une liqueur-mère dudit cristallisoir (1) dans ledit condenseur (4).

6. Appareil selon la revendication 4, comprenant en outre:
des moyens pour renvoyer une liqueur-mère dudit cristallisoir (1) dans ledit condenseur (4); et
un échangeur de chaleur (16) pour effectuer un échange de chaleur entre ledit condensat transporté dudit condenseur (4) dans ledit cristallisoir (1) et ladite liqueur-mère renvoyée dudit cristallisoir (1) dans ledit condenseur (4).

7. Appareil selon la revendication 4, comprenant en outre un sous-absorbeur (2A) situé entre ledit cristallisoir (1) et ledit absorbeur (2B) pour mettre en contact ladite substance organique (M) avec ladite vapeur évaporée dudit cristallisoir (1) avant d'introduire ladite substance organique (M) dans ledit cristallisoir (1).
